# EUROPEAN PATENT APPLICATION

(11) **EP 0 789 203 A1**
(43) Date of publication of application: **13.08.1997**
(21) Application number: 97101334.7
(22) Date of filing: 29.01.1997
(51) Int. Cl.: F24H 9/00, F24H 8/00

(54) **Gas condensing bioler**

(30) Priority: 08.02.1996 IT MN960006
(71) Applicant: UNICAL AG S.p.A., I-46033 Casteldario (Mantova) (IT)
(72) Inventor: Jahier, Giovanni, 46100 Mantova (IT); Chene, Jean-François, 75005 Paris (FR)
(74) Representative: Modiano, Guido, Dr.-Ing.

(57) **Abstract**

The present invention relates to a gas condensing boiler, characterized in that each one of its elements (1,2) comprises means adapted to convey at least part of the incoming cold water directly into the region proximate to the combustion chamber (3) and to convey sufficiently cold water to the region struck by the gases during the condensation of the water vapor contained therein, and to then direct all the water to the outlet coupling, so as to trace a path which brings it into contact with the entire wall struck by the gases.

## Description

The present invention relates to a gas condensing boiler.

It is known that gas-fired boilers have become widespread in the field of heating systems; these boilers are known as condensing boilers because the gases produced by combustion are cooled inside them until the water vapor contained therein condenses, so as to recover the latent condensation heat and transfer it to the water to be heated, which flows through said boilers.

Conventional boilers have at least one pair of elements arranged side-by-side which are crossed by the water to be heated, which enters cold from the return duct of the system through an inlet coupling in the lower region and leaves, after being heated, from an outlet coupling located proximate to the top.

A portion of space remains between the two side-by-side elements and has, at the top, a burner which is accommodated in an adapted combustion chamber; the gases pass through said portion of space and flow downwards, transferring heat to the water contained in the elements and remaining in said portion of space until they cool to the point of causing the condensation of the water vapor contained therein.

This effect is facilitated by the fact that the gases in the condensing region, which is located proximate to the base of the boiler upstream of the outlet leading towards a spent-gas chamber, strike walls which are in contact, on the other side, with the colder water, which is indeed the water at the inlet, which is located in this very region; accordingly, conventional boilers are considerably effective from this point of view.

However, said boilers entail a drawback which is caused by the fact that in the upper region of the elements the wall is in contact with the combustion chamber on one side, and is therefore in maximum heat flow conditions, and is in contact, on the other side, with water which is at the highest temperature since it is by then close to the outlet, and is therefore in the most favorable conditions for the occurrence of scaling on said wall, caused by the deposition of calcium carbonate, which conventionally begins above a certain temperature and increases as said temperature rises.

The concurrent occurrence of the maximum heat flow and of the most intense scaling of the wall in the upper region of the boiler leads to a dangerous situation, since scale is an insulator and it is therefore possible to cause localized overheatings in the regions where scale is thickest, with consequent breakages.

The aim of the present invention is therefore to provide a gas condensing boiler wherein the danger of breakage at the combustion chamber is practically eliminated and the condensation of the water vapor present in the gases is correctly activated.

This aim is achieved by a gas condensing boiler, according to the invention, particularly for heating systems, comprising at least two elements and having a cold water inlet coupling and an outlet coupling for the water that has heated by flowing inside said elements, said boiler also comprising a burner in a combustion chamber which is located at the top of a portion of space lying between the two elements, the walls of said elements that face said portion of space having protrusions adapted to activate heat exchange between the gases produced by the burner and the water contained inside said elements, characterized in that each element comprises means adapted to convey at least part of the incoming cold water directly in the region proximate to the combustion chamber and to convey sufficiently cold water to the region struck by the gases during the condensation of the water vapor contained therein, and to then direct all the water to the outlet coupling, so as to trace a path which brings it into contact with the entire wall struck by the gases.

Further characteristics and advantages will become apparent from the description of some preferred but not exclusive embodiments of the invention, illustrated only by way of non-limitative example in the accompanying drawings, wherein:
figure 1 is a perspective view of the invention, with wall portions removed for the sake of clarity in illustration;
figures 2 and 3 are schematic views of two different embodiments of the invention;
figure 4 is another perspective view of a further embodiment of the invention.

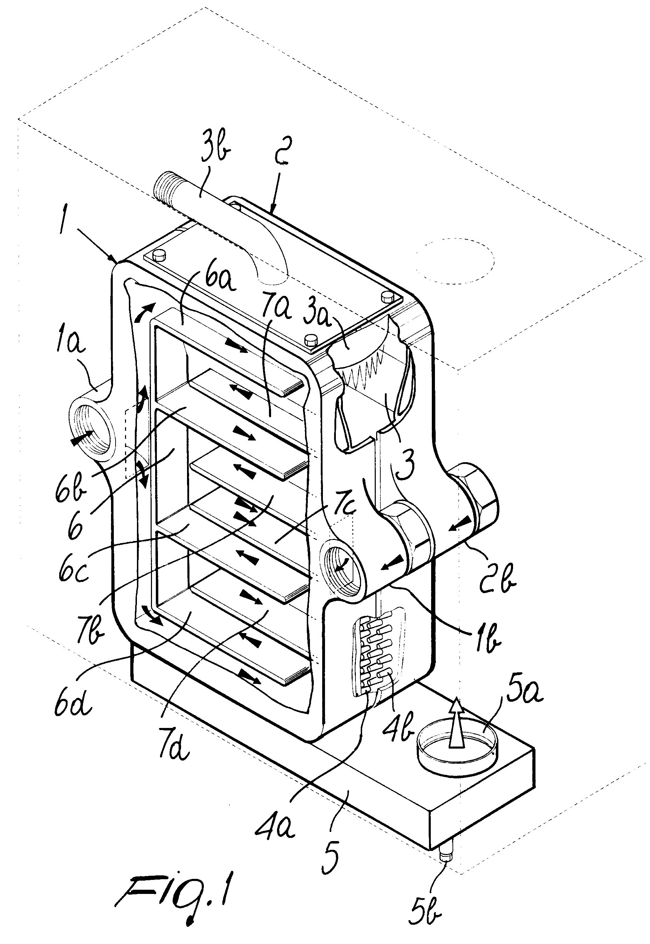

With reference to the above figures 1, the reference numerals 1 and 2 designate the two elements which are located inside the boiler and are provided with interconnected inlet couplings, such as 1a for the element 1, and with outlet couplings 1b for the element 1 and 2b for the element 2 which are also interconnected; the coupling 1a is connected to the cold water return line of a heating system and the coupling 1b is connected to the line for delivering hot water to said system; through the interconnection of the individual couplings, water flows through the two elements in parallel.

The reference numeral 3 designates the combustion chamber of a gas burner 3a supplied through the pipe 3b; the chamber is located proximate to the top of a portion of space lying between the elements 1 and 2, the facing surfaces whereof have studs such as 4a and 4b adapted to activate heat exchange between the gases produced by the burner and the water contained inside the elements 1 and 2.

Said gases flow downwards through the portion of space lying between the elements 1 and 2 and remain in said portion of space until they cool to the point of causing the condensation of the water vapor contained therein; this condensation occurs at the region, referenced to as condensing region, lying proximate to the base of said elements; the gases then flow into the spent-gas chamber 5, where the condensate droplets are deposited, and then finally flow to the stack by means of the coupling 5a, following the arrow shown in the figure; the reference numeral 5b designates a coupling for a duct for removing the condensate accumulated in said chamber 5.

All this occurs in a conventional manner.

The main feature of the invention in the embodiment described hereinafter resides in the fact that each one of the two elements has means which are adapted to convey a portion of the incoming cold water directly towards the upper region which is proximate to the combustion chamber 3 and a portion of said water directly downwards, i.e., proximate to the condensing region, so as to meet, in an optimum manner, the dual requirement of protecting said combustion chamber and of causing an active condensation of the water vapor contained in the gases.

As regards the water circuit described hereinafter, the two elements are identical and therefore reference shall be made only to the element 1.

Said means thus comprise a longitudinal partition 6, which is adapted to divide the stream of cold water entering through the coupling 1a into two portions, illustrated by the arrows shown in the figure.

One portion flows directly upwards, i.e., towards the region proximate to the combustion chamber 3, and thanks to the presence of the transverse partitions 6a and 6b extending from the partition 6 and of the likewise transverse partitions 7a and 7b flows along a winding path which carries it to the outlet coupling 1b.

The remaining portion of the incoming water stream flows towards the downward condensing region and, thanks to the presence of the transverse partitions 6d and 6c extending from the partition 6 and of the likewise transverse partitions 7d and 7c, said portion, too, flows along a winding path which ends at the outlet coupling 1b.

Whilst the first portion of water, which has flowed upwards, keeps the wall of the element 1 that faces the combustion chamber 3 cool enough to prevent the dangerous formation of scale inside it, the remaining portion cools the wall of said element 1 in the condensing region enough to ensure condensation; therefore, the boiler according to the invention is ideally characterized in terms of safety in operation and high efficiency.

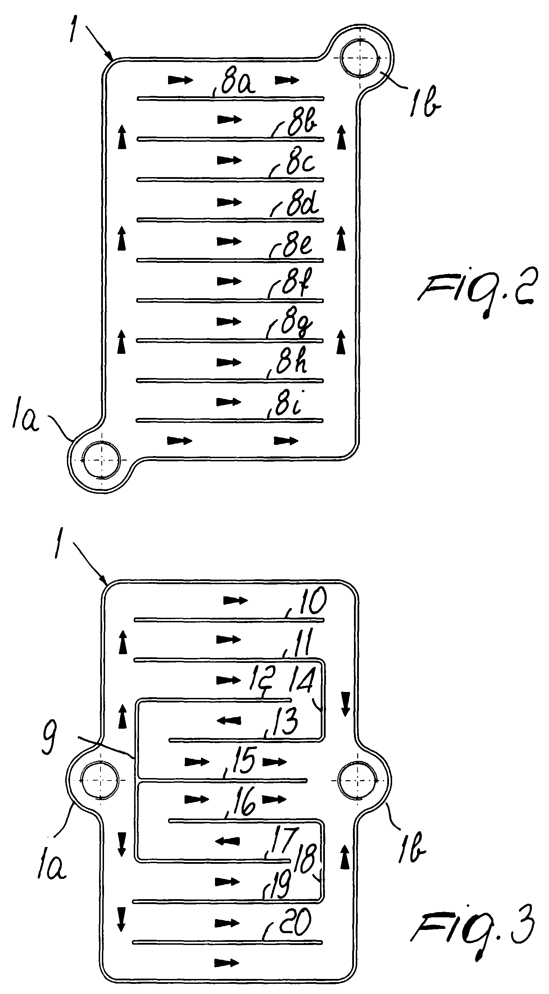

A first different embodiment of the invention is illustrated in figure 2 and shows that the element 1 provides for the presence of the parallel partitions 8a, 8b, 8c, 8d, 8e, 8f, 8g, 8h, 8i, which produce a circulation of water illustrated by the arrows and divided into a plurality of portions.

One portion of the cold water that enters through the coupling 1a, namely the portion that enters the channel between the wall of the element and the partition 8a, but also the portion that flows through the channel between the partitions 8a and 8b, directly reaches the region proximate to the combustion chamber; another portion of said cold water, namely the portion that flows through the channel between the wall of the element and the partition 8i, but also the portion that flows through the channel between the partitions 8h and 8i, directly reaches the condensing region; therefore, this embodiment, too, offers the functional characteristics described with reference to the above first embodiment.

A second different embodiment of the invention is shown in figure 3, where the partition 9 divides the stream of incoming cold water into two portions.

One part of the first portion flowing upwards, namely the part that flows between the wall of the element and the partition 10, but also the part that flows through the channel between the partitions 10 and 11, directly reaches the region proximate to the combustion chamber and then reaches the outlet coupling 1b, whilst the remaining part of said first portion reaches said outlet coupling after a winding path which is guided by the partitions 12, 14, 13, and 15.

Likewise, part of the portion of the stream of cold water flowing downwards, namely the part that flows between the wall of the element and the partition 20, but also the part that flows through the channel between the partitions 19 and 20, directly reaches the condensing region and then reaches the outlet coupling 1b, whilst the remaining part reaches said outlet coupling after a winding path between the partitions 17, 18, 16, and 15.

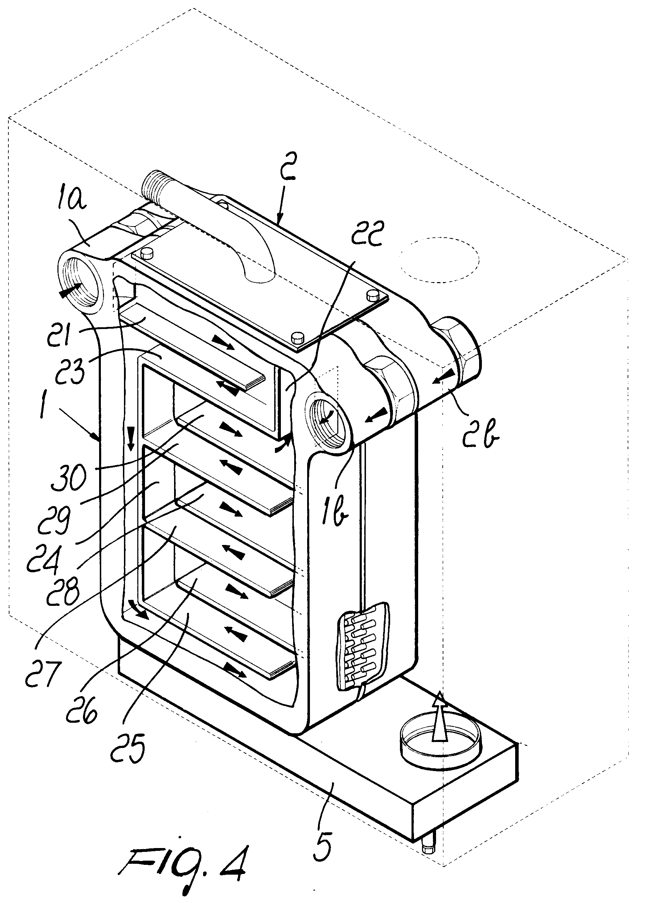

Figure 4 illustrates a further embodiment, which differs from the preceding ones because here the stream of incoming cold water is not split.

The entire stream of cold water that has entered through the coupling 1a is in fact directed immediately by the partitions 21, 22, and 23 so as to cover a short winding path in the region proximate to the combustion chamber and is then conveyed directly by the partition 24 to the lower condensing region; from here, a plurality of partitions 25, 26, 27, 28, 29, and 30 forms a winding path that leads the water to the outlet coupling.

The entire stream of cold water which immediately strikes the wall of the element 1 in the region proximate to the combustion chamber does not entail any risk of depositing scale on said wall and leaves said region to reach the condensing region while still cold enough to act efficiently in facilitating condensation.

The described invention is susceptible of numerous modifications and variations, in addition to those described, all of which are within the scope of the inventive concept; thus, for example, the inlet and outlet couplings can be located at any level.

All the described embodiments relate to boilers with elements made in the form of vessels adapted to be crossed by water; accordingly, the means for creating the particular water paths described are provided as partitions for dividing said vessels; in the case of elements comprising a plate to which water conveyance pipes are rigidly coupled, the water conveyance means according to the invention are provided by a particular configuration of said pipes.

In the practical execution of the invention, the materials employed, as well as the shapes and the dimensions, may be any according to requirements; moreover, all the details may be replaced with other technically equivalent elements.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A gas condensing boiler, particularly for heating systems, comprising at least two elements and provided with a cold water inlet coupling and with an outlet coupling for the water that has heated by flowing inside said elements, said boiler also comprising a burner in a combustion chamber which is located at the top of a portion of space lying between the two elements, the walls of said elements that face said portion of space having protrusions adapted to activate heat exchange between the gases produced by the burner and the water contained inside said elements, characterized in that each element comprises means adapted to convey at least part of the incoming cold water directly in the region proximate to the combustion chamber and to convey sufficiently cold water to the region struck by the gases during the condensation of the water vapor contained therein, and to then direct all the water to the outlet coupling, so as to trace a path which brings it into contact with the entire wall struck by the gases.

2. A boiler according to claim 1, characterized in that each element comprises means adapted to convey a portion of incoming cold water directly towards the region which is proximate to the combustion chamber and a portion of said cold water directly towards the condensing region and to cause the entire stream of water to converge towards the outlet coupling.

3. A boiler according to claims 1 and 2, characterized in that said means are adapted to divide the stream of incoming cold water into two portions and to make the first one of said portions directly reach the region proximate to the combustion chamber and to make the second one of said portions directly reach the condensing region, subsequently directing them along a winding path which leads to the outlet coupling.

4. A boiler according to claims 1 and 2, characterized in that said means are adapted to divide the stream of incoming cold water into a plurality of portions, whereof at least one directly reaches the region proximate to the combustion chamber and at least one directly reaches the condensing region, and to make all said portions converge towards the outlet coupling.

5. A boiler according to claims 1 and 2, characterized in that said means are adapted to divide the stream of incoming cold water into two portions which respectively and at least partially directly reach the region proximate to the combustion chamber and the condensing region, each portion then flowing towards the outlet coupling, part of said portions doing so directly and another part of said portions doing so after a winding path.

6. A boiler according to claim 1, characterized in that each element comprises means adapted to convey the entire stream of incoming cold water directly into the region proximate to the combustion chamber and to make said entire stream follow a short path in said region to then convey it directly to the condensing region and from there to the outlet coupling.

7. A boiler according to claims 1 and 6, characterized in that said means adapted to convey the entire stream of incoming cold water are shaped so as to direct said stream along a short winding path in the region proximate to the combustion chamber and then convey it directly to the condensing region and from there towards the outlet coupling along a winding path.

8. A boiler according to one or more of the preceding claims, comprising elements shaped like vessels through which the water flows, characterized in that said means comprise partitions which divide said vessel.

9. A boiler according to one or more of the preceding claims, comprising elements which are shaped like a plate whereto water conveyance pipes are rigidly coupled, characterized in that said means comprise appropriately shaped pipes.
